# EUROPÄISCHE PATENTSCHRIFT

(11) **EP 0 415 029 B1**
(45) Veröffentlichungstag und Bekanntmachung des Hinweises auf die Patenterteilung: **22.06.1994**
(21) Anmeldenummer: 90112682.1
(22) Anmeldetag: 03.07.1990
(51) Int. Cl.: F16G 13/16

(54) **Energieführungskette**
Supporting chain for energy carriers
Chaîne porteuse pour lignes de transport d'énergie

(30) Priorität: 26.08.1989 DE 3928236
(43) Veröffentlichungstag der Anmeldung: 06.03.1991
(73) Patentinhaber: Kabelschlepp Gesellschaft mit beschränkter Haftung, 57074 Siegen (DE)
(72) Erfinder: Moritz, Werner, D-5900 Siegen (DE); Wisser, Georg, D-5239 Luckenbach (DE); Jud, Volker, D-5901 Wilnsdorf (DE)
(74) Vertreter: Kahlhöfer, Hermann, Dipl.-Phys.

(56) Entgegenhaltungen:
- DE-A- 3 431 531
- DE-B- 2 417 516
- DE-C- 3 617 447
- DE-U- 8 910 218
- US-A- 3 779 003

## Beschreibung

Gegenstand der Erfindung ist eine Energieführungskette mit aus zwei im Abstand voneinander und parallel zueinander angeordneten Kettenlaschen und einem diese miteinander verbindenden Steg gebildeten Kettengliedern, die in einem Überlappungsbereich gelenkig miteinander verbunden sind.

Energieführungsketten werden in der Regel zwischen einem festen Anschluß und einem beweglichen Verbraucher, beispielsweise dem Support einer Werkzeugmaschine, aber auch der Laufkatze eines Kranes angeordnet, die einen großen Verfahrweg haben können. Es kann dabei vorkommen, daß das obere Trum einer stehend angeordneten Energieführungskette auf dem unteren Trum oder einem besonderen Gleitblech abgelegt wird und darauf gleiten muß. Dabei kann es zu erheblichen Verschleißerscheinungen und auch einer unangenehmen Geräuschentwicklung kommen.

Aus der DE-A-34 31 531 ist eine aus einteilig hergestellten Kettengliedern bestehende Energieführungskette bekannt, bei der am Untergurt eines Quersteges Gleitkufen angeformt sind. Diese bekannten Gleitkufen werden zwangsläufig zusammen mit dem übrigen Kettenglied in einer Spritzform hergestellt und können deshalb nur aus dem gleichen Material bestehen wie das übrige Kettenglied auch. Damit die Kettenglieder einer aus Kunststoff hergestellten Energieführungskette eine ausreichende Stabilität haben, wird dafür in der Regel ein glasfaserverstärkter Kunststoff (GFK) verwendet. Dieses Material hat eine große Härte und deshalb keine Gleit- und Dämpfungseigenschaften. Für Gleitkufen ist GFK der falsche Werkstoff.

Aus der DE-A-24 17 516 ist eine Energieführungskette bekannt, welche sich auf Rollen abstützt. Der damit verbundene hohe Widerstand und die ruckartige Fortbewegung der Energieführungskette stellen eine hohe Materialbelastung dar.

In den Druckschriften DE-A-36 17 447 und US-A-37 79 003 sind gattungsgleiche Energieführungsketten offenbart, bei denen die Kettenlaschen mit Stegen verbunden sind. Diese Stege haben Halte-, Abdicht- und Gleitfunktionen zu erfüllen, so daß aus Stabilitätsgründen auch hier ein Material Verwendung findet, welches keine optimalen Gleit- und Dämpfungseigenschaften aufweist.

Davon ausgehend liegt der Erfindung die **Aufgabe** zugrunde, die Energieführungskette so auszubilden, daß die Kettenglieder möglichst ohne Verschleiß und geräuscharm aufeinander gleiten können.

Als technische **Lösung** wird dafür vorgeschlagen, die an sich bekannten Gleitkufen aus einem gleitfähigen und verschleißarmen Kunststoff mit guten Dämpfungseigenschaften zu fertigen und an den Schmalseiten der Kettenlaschen lösbar zu befestigen.

Bei einer praktischen Ausführungsform können die Gleitkufen in Kettenlängsrichtung einen L-förmigen Querschnitt aufweisen, wobei ein Schenkel an der Außenseite einer Kettenlasche anliegt und der andere Schenkel die Schmalseite der Kettenlaschen übergreift. Im Winkel zwischen den beiden Schenkeln der Gleitkufen können T- oder schwalbenschwanzförmige Einschubprofile angeformt werden, die in korrespondierende und mit entsprechenden Hinterschneidungen versehene Profilführungen der Kettenlaschen einsteckbar sind.

In weiterer Ausgestaltung der Erfindung wird vorgeschlagen, zusätzlich zu den Einschubprofilen federnde Rastzungen an den Gleitkufen vorzusehen, welche im aufgesteckten Zustand einen Rastnocken an der Kettenlasche übergreifen und damit die Gleitkufen in der aufgesteckten Lage an den Kettenlaschen fixieren.

Eine Energieführungskette mit erfindungsgemäß ausgebildeten und an den Kettenlaschen lösbar befestigten Gleitkufen hat den **Vorteil,** daß die Gleitkufen und die Kettenlaschen aus unterschiedlichen Materialien, nämlich die Kettenlaschen aus einem die erforderliche Stabilität gewährleistenden GFK und die Gleitkufen aus Polyurethan hergestellt werden können. Ein weiterer **Vorteil** besteht darin, daß die Kettenglieder wahlweise mit oder ohne Gleitkufen betrieben werden können, je nachdem für welchen Anwendungsfall die Energieführungskette bestimmt ist.

Weitere Einzelheiten und Vorteile ergeben sich aus der nachfolgenden Beschreibung der zugehörigen Zeichnungen, in denen ein bevorzugtes Ausführungsbeispiel einer Energieführungskette mit Gleitkufen in Ansichten und Schnitten dargestellt worden ist. In den Zeichnungen zeigen:

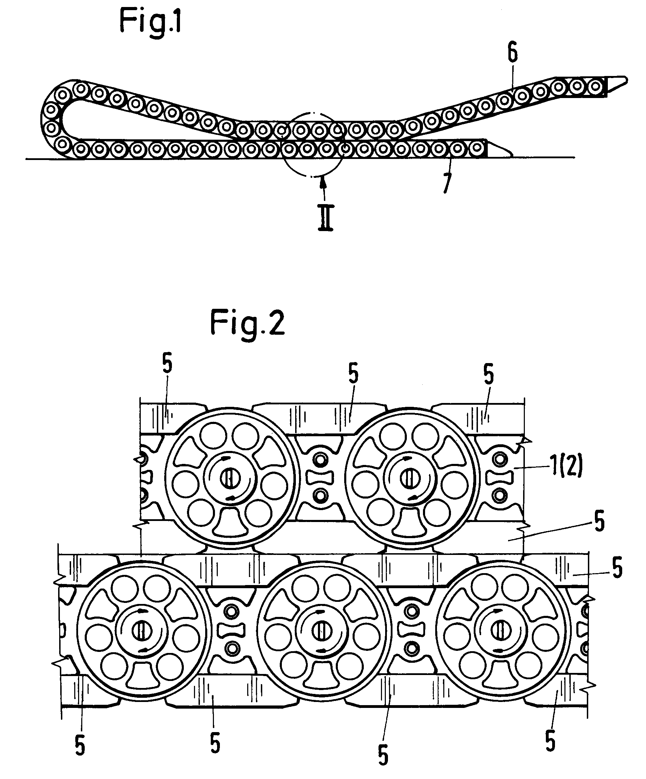

- Fig. 1: eine längere Energieführungskette mit auf einem unteren, liegenden Trum abgelegtem, oberen Trum in Seitenansicht;
- Fig. 2: einen vergrößerten Ausschnitt aus Fig. 1 zur Veranschaulichung der gegenseitigen Lage und Abstützung der Gleitkufen im Auflagebereich in Seitenansicht;

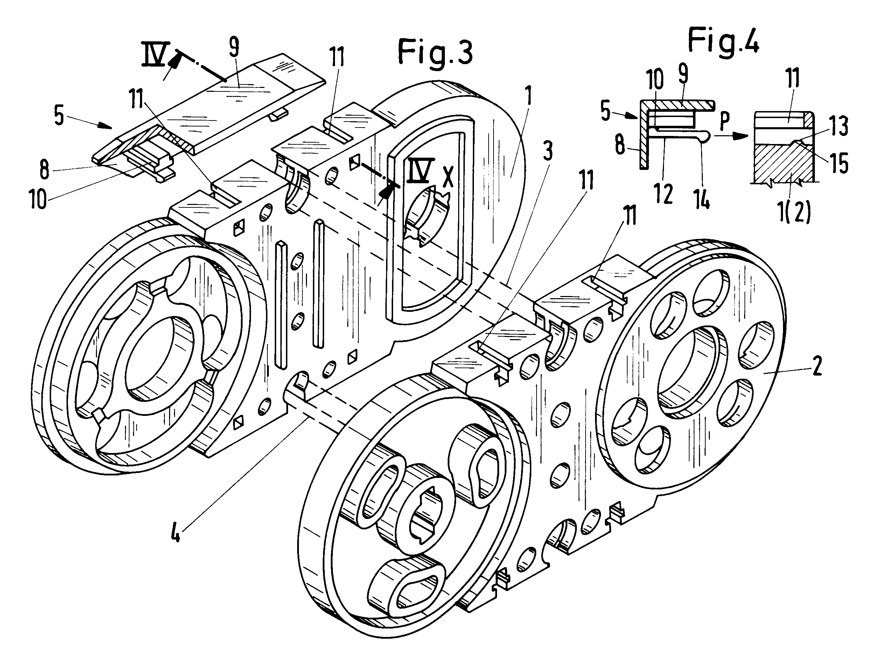

- Fig. 3: ein Kettenglied in perspektivischer Darstellung;
- Fig. 4: eine Gleitkufe und einen Abschnitt einer Kettenlasche entlang der Linie IV-IV in Fig. 3 geschnitten;
- Fig. 5: eine Gleitkufe in vergrößerter, perspektivischer Darstellung;
- Fig. 6: eine Gleitkufe mit angeformtem Vorsprung in vergrößerter, perspektivischer Darstellung.

Die Kettenglieder einer Energieführungskette aus Kunststoff werden von zwei im Abstand voneinander und parallel zueinander angeordneten Kettenlaschen 1 und 2 und diese miteinander verbindenden Traversen 3 und 4 gebildet, die einen Hohlraum umgeben, in dem die - nicht dargestellten - Energieleitungen schonend und zugentlastet verlegt werden können. An den oberen und unteren Schmalseiten der Kettenlaschen 1,2 sind Gleitkufen 5 lösbar befestigt, die aufeinander gleiten, wenn das obere Trum 6 einer Energieführungskette sich auf einem Abschnitt auf dem unteren Trum 7 abstützt. Dabei ist die Länge der Gleitkufen so bemessen, daß die Abstände zwischen den Gleitkufen gelenkig verbundener, benachbarter Kettenlaschen 1,2 überbrückt werden.

Jede Gleitkufe 5 hat einen in Kettenlängsrichtung L-förmigen Querschnitt und liegt mit einem Schenkel 8 der Außenseite ihrer Kettenlasche 1,2 an, während der andere Schenkel 9 die Schmalseite der Kettenlasche übergreift. An der Innen- bzw. Unterseite der Schenkel 8,9 sind im Abstand voneinander T-förmige Einschubprofile 10 angeformt, die in korrespondierende und mit entsprechenden Hinterschneidungen versehene Profilführungen 11 in den Kettenlaschen 1,2 eingreifen.

An jedem Einschubprofil 10 ist eine federnde Rastzunge 12 angeformt, die in eine durchgehende Öffnung 13 der Kettenlasche 1,2 einschiebbar ist und mit einer Nase 14 einen Rastnocken 15 in der Öffnung 13 übergreifen kann.

Die Enden der Schenkel 9 jeder Gleitkufe 5 sind mit Schrägflächen 16 versehen, die das Aufgleiten erleichtern.

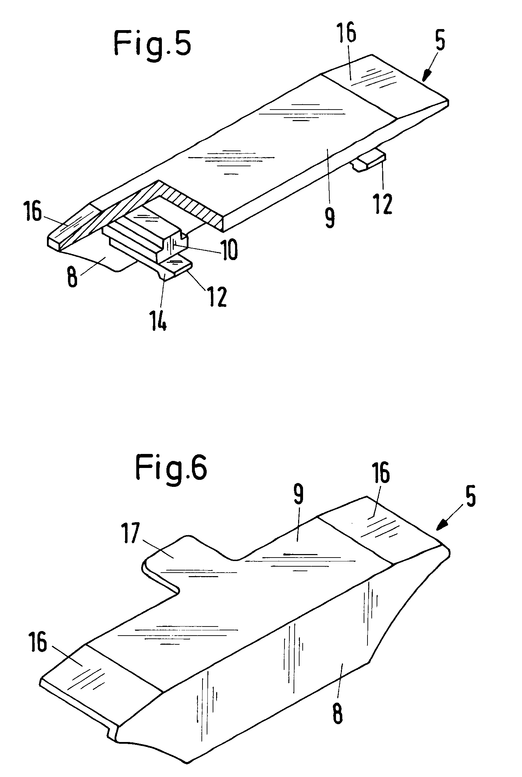

In der Ausführungsform gemäß Fig. 6 ist die Gleitkufe 5 an ihrem Schenkel 9 mit einem die Schmalseite der Kettenlasche 1,2 nach innen überragenden Vorsprung 17 versehen, der dazu dient, ein Abdeckband festzuhalten, welches zwischen den Traversen 3,4 und den Vorsprüngen 17 eingezogen werden kann. Die Vorsprünge 17 können aber auch dazu dienen, Abdeckplatten festzuhalten, welche auf die Traversen 3,4 aufgesteckt worden sind.

Die Gleitkufen 5 können fakultativ an den Kettenlaschen 1,2 befestigt werden. Dies geschieht durch einfaches Aufschieben in Richtung des Pfeiles P, wie es in Fig. 4 dargestellt worden ist. Wenn es notwendig werden sollte, können die Gleitkufen 5 auch sehr einfach wieder von den Kettenlaschen 1,2 abgezogen werden. Dazu genügt es, die Rastzungen 12 am freien, aus dem Durchbruch der Profilführung 11 herausragenden Ende etwas anzuheben und die Gleitkufen 5 dann quer zu den Kettenlaschen 1,2 zu verschieben.

### Bezugszeichenliste

- 1: Kettenlasche
- 2: Kettenlasche
- 3: Traverse
- 4: Traverse
- 5: Gleitkufe
- 6: Trum (oberes)
- 7: Trum (unteres)
- 8: Schenkel
- 9: Schenkel
- 10: Einschubprofil
- 11: Profilführung
- 12: Rastzunge
- 13: Öffnung
- 14: Nase
- 15: Rastnocken
- 16: Schrägfläche
- 17: Vorsprung

## Patentansprüche

1. Energieführungskette mit aus zwei im Abstand voneinander und parallel zueinander angeordneten Kettenlaschen (1,2) und einem diese miteinander verbindenden Steg (3,4) gebildeten Kettengliedern, die in einem Uberlappungsbereich gelenkig miteinander verbunden sind,
**gekennzeichnet durch**
an den Schmalseiten der Kettenlaschen (1,2) lösbar befestigte Gleitkufen (5) aus einem gleitfähigen und verschleißarmen kunststoff mit guten Dämpfungseigenschaften.

2. Energieführungskette nach Anspruch 1, dadurch gekennzeichnet, daß die Gleitkufen (5) mit T- oder schwalbenschwanzförmigen Einschubprofilen (10) in korrespondierenden, mit entsprechenden Hinterschneidungen versehenen Profilführungen (11) der Kettenlaschen (1,2) befestigt sind.

3. Energieführungskette nach den Ansprüchen 1 und 2, dadurch gekennzeichnet, daß die Gleitkufen (5) federnde Rastzungen (12) haben, welche im aufgesteckten Zustand einen Rastnocken (15) an den Kettenlaschen (1,2) übergreifen.

4. Energieführungskette nach den Ansprüchen 1 bis 3, dadurch gekennzeichnet, daß die Gleitkufen (5) einen in Kettenlängsrichtung L-förmigen Querschnitt aufweisen und die Einschubprofile (10) und Rastzungen (12) an die Schenkel (8,9) angeformt sind.

5. Energieführungskette nach den Ansprüchen 1 bis 4, dadurch gekennzeichnet, daß die Gleitkufen (5) an einem die Kettenlaschen (1,2) übergreifenden Schenkel (9) mit einem Vorsprung (17) zum Festhalten eines Abdeckbandes oder von Abdeckplatten versehen sind.

6. Energieführungskette nach den Ansprüchen 1 bis 5, dadurch gekennzeichnet, daß die Länge der Gleitkufen (5) größer als der Abstand zwischen den Gleitkufen (5) gelenkig verbundener, benachbarter Kettenlaschen (1,2) ist.

7. Energieführungskette nach den Ansprüchen 1 bis 6, dadurch gekennzeichnet, daß die Gleitkufen (5) an ihrem die Kettenlaschen (1,2) übergreifenden Schenkel (9) mit Schrägflächen (16) versehen sind.

8. Energieführungskette nach den Ansprüchen 1 bis 7, dadurch gekennzeichnet, daß die Gleitkufen (5) aus Polyurethan hergestellt sind.

## Claims

1. An energy feed carrier chain comprising chain link members formed from two spaced-apart chain side plates (1, 2) which are arranged parallel to each other, and a bar (3, 4) connecting the chain side plates together, the chain link members being pivotably connected together in an overlap region, characterised by sliding skids (5) which are releasably feed to the narrow sides of the chain side plates (1, 2) and comprise a slidable and low-wear plastics material with good damping properties.

2. An energy feed carrier chain according to claim 1 characterised in that the sliding skids (5) are feed by T-shaped or dovetail-shaped insertion profiles (10) in corresponding profile guides (11) provided with corresponding undercut configurations, in the chain side plates (1, 2).

3. An energy feed carrier chain according to claims 1 and 2 characterised in that the sliding skids (5) have resilient retaining tongues (12) which in the fitted condition engage over a retaining projection (15) on the chain side plates (1, 2).

4. An energy feed carrier chain according to claims 1 to 3 characterised in that the sliding skids (5) are of a cross-section which is L-shaped in the longitudinal direction of the chain and the insertion profiles (10) and retaining tongues (12) are formed on the limbs (8, 9).

5. An energy feed carrier chain according to claims 1 to 4 characterised in that the sliding skids (5) are provided on a limb (9) which engages over the chain side plates (1, 2) with a projection (17) for securing a cover band or cover plates.

6. An energy feed carrier chain according to claims 1 to 5 characterised in that the length of the sliding skids (5) is greater than the spacing between the sliding skids (5) of pivotably connected adjacent chain side plates (1, 2).

7. An energy feed carrier chain according to claims 1 to 6 characterised in that the sliding skids (5) are provided with inclined surfaces (16) at their limb (9) which engages over the chain side plates (1, 2).

8. An energy feed carrier chain according to claims 1 to 7 characterised in that the sliding skids (5) are made from polyurethane.

## Revendications

1. Chaîne de transmission d'énergie, comportant des chaînons reliés les uns avec les autres de manière articulée dans une zone de superposition et constitués de deux maillons de chaîne (1, 2) à distance l'un de l'autre et disposés parallèlement l'un par rapport à l'autre, et d'un étai (3, 4) reliant lesdits maillons,
caractérisée par
des patins de glissement (5), fixés de manière amovible aux côtés étroits des maillons de chaîne (1, 2), constitués d'une matière plastique glissante et à faible taux d'usure qui présente de bonnes propriétés d'amortissement.

2. Chaîne de transmission d'énergie selon la revendication 1, caractérisée en ce que les patins de glissement (5) sont fixés par des profilés d'insertion (10) en forme de T ou de queue d'aronde dans des guides profilés (11) des maillons de chaîne (1, 2), leur correspondant, pourvus de contre-dépouilles correspondantes.

3. Chaîne de transmission d'énergie selon l'une quelconque des revendications 1 et 2, caractérisée en ce que les patins de glissement (5) comportent des onglets d'encliquetage (12) élastiques, qui, lorsqu'ils sont encliquetés, recouvrent un ergot d'encliquetage (15) sur les maillons de chaîne (1, 2).

4. Chaîne de transmission d'énergie selon l'une quelconque des revendications 1 à 3, caractérisée en ce que les patins de glissement (5) présentent une découpe en forme de L dans le sens longitudinal de la chaîne, et en ce que les profilés d'insertion (10) et les onglets d'encliquetage (12) sont formés sur les montants (8, 9).

5. Chaîne de transmission d'énergie selon l'une quelconque des revendications 1 à 4, caractérisée en ce que les patins de glissement (5) sont pourvus, sur un montant (9) recouvrant les maillons de chaîne (1, 2) d'un épaulement, pour fixer une bande de couverture ou des plaques de couverture.

6. Chaîne de transmission d'énergie selon l'une quelconque des revendications 1 à 5 caractérisée en ce que la longueur des patins de glissement (5) est supérieure à l'écartement entre les patins de glissement (5) de maillons de chaînes (1, 2) adjacents, reliés de manière articulée.

7. Chaîne de transmission d'énergie selon l'une quelconque des revendications 1 à 6, caractérisée en ce que les patins de glissement (5) sont pourvus de surfaces obliques (16) sur leur montant (9) recouvrant les maillons de chaînes (1, 2).

8. Chaîne de transmission d'énergie selon l'une quelconque des revendications 1 à 7, caractérisée en ce que les patins de glissement (5) sont réalisés en polyuréthanne.
